# EUROPÄISCHE PATENTANMELDUNG

(11) **EP 1 241 847 A1**
(43) Veröffentlichungstag der Anmeldung: **18.09.2002**
(21) Anmeldenummer: 01106137.1
(22) Anmeldetag: 13.03.2001
(51) Int. Cl.: H04L 29/06, H04M 7/00

(54) **Übermittlung von Informationen mit einer verifizierten QoS in einem Kommunikationsnetz**

(71) Anmelder: SIEMENS AKTIENGESELLSCHAFT, 80333 München (DE)
(72) Erfinder: Knäbchen, Andreas, Dr., 81377 München (DE); Liebhart, Rainer, 81476 München (DE)

(57) **Zusammenfassung**

In einem Kommunikationsnetz, das eine Call Control Ebene CCL, eine Resource Control Ebene RCL und zumindest einem einer Informationsübermittlung zugeordneten Endpunkt A umfasst, wird eine für eine Informationsübermittlung ermittelte QoS Anforderung RQ lediglich in der Call Control Ebene CCL aufwändig verifiziert. Im Anschluss wird hieraus ein verschlüsseltes Token T gebildet und über den Endpunkt A an die Resource Control Ebene RCL übermittelt. Letztere verifiziert eine vom Endpunkt A eingehende QoS Anforderung RQ lediglich mit Hilfe des entschlüsselten Tokens T. Im Erfolgsfall wird das Kommunikationsnetz derart konfiguriert, dass die Informationen mit der erfindungsgemäß verifizierten QoS übermittelt werden.

Die Erfindung ermöglicht eine effiziente, sichere und korrekte Bereitstellung von QoS in integrierten Sprach- und Datennetzen. Insbesondere werden weitreichende Modifikationen bestehender Router der Resource Control Ebene RCL vermieden. Bei regelmäßig wiederholter Übermittlung der Token T wird zudem ein konsistentes Auslösen der bereitgestellten QoS sowie eine sichere und korrekte Vergebührung der Informationsübermittlung unterstützt.

## Beschreibung

Die Erfindung betrifft Verfahren, Computerprogrammprodukte, Endpunkte und Anordnungen zur Übermittlung von Informationen mit einer verifizierten QoS (Quality of Service) in einem Kommunikationsnetz.

In der Vergangenheit haben sich zwei wesentliche Typen von Kommunikationsnetzen zur Übermittlung von Informationen herausgebildet: Paketorientierte Datennetze und leitungsorientierte Sprachnetze. Sie unterschieden sich u.a. durch ihre unterschiedlichen Anforderungen an QoS und Sicherheit.

QoS - auch Dienstgüte genannt - wird je nach Kontext unterschiedlich definiert und in der Folge mit jeweils unterschiedlichen Metriken bewertet. Bekannte Beispiele für Metriken zur Messung von Dienstgüte sind die Anzahl der übermittelten Informationen (Bandwidth), die Anzahl der nicht übermittelten Informationen (Loss Rate), die - ggf. gemittelte - zeitliche Verzögerung bei der Übermittlung (Delay), die - ggf. gemittelte - Abweichung vom ansonsten üblichen Abstand zwischen je zwei Informationsübermittlungen (Delay Jitter), oder die Anzahl der erst gar nicht zur Übermittlung zugelassenen Informationen (Blocking Rate).

Sicherheit umfasst z.B. Authentifikation und Autorisierung der Teilnehmer sowie Integrität und Vertraulichkeit der übermittelten Informationen. Hierbei ist Authentifikation die eindeutige Identifikation des sendenden Teilnehmers, Autorisierung die Zuweisung von Berechtigungen, Integrität die Garantie von unverfälschten Informationen und Vertraulichkeit die Verschlüsselung der Informationen, so dass Dritte deren Inhalt nicht verstehen können.

Bei Verschlüsselung wird zwischen symmetrischer und asymmetrischer Verschlüsselung unterschieden. Symmetrische Verschlüsselungsverfahren sind im Vergleich bei Codierung und Dekodierung erheblich schneller als asymmetrische Verfahren. Bei einer symmetrischen Verschlüsselung teilen Sender und Empfänger üblicherweise ein gemeinsames Geheimnis - auch 'Schlüssel' oder 'Key' genannt -, mit dessen Hilfe die verschlüsselten Informationen codiert und dekodiert werden. Bei einer asymmetrischen Verschlüsselung besitzt jede Partei ein privates Geheimnis ('private key'), zu dem passend ein öffentlich bekannter Schlüssel ('public key') generiert wird. Wird eine Information von einem Sender mit dem public key eines Empfängers codiert, kann sie nur vom Empfänger mit dessen private key decodiert werden. Somit ist die Vertraulichkeit der gesendeten Information gesichert, denn nur der Empfänger kann die Information decodieren. Alternativ kann eine Information auch mit dem private key des Senders codiert und von jedem Empfänger mit dem public key des Senders decodiert werden. Hierdurch wird der Sender sicher authentifiziert, denn die Dekodierung gelingt nur, wenn die Information mit dem nur dem Sender bekannten private key erfolgt ist. Dieses Vorgehen wird auch als 'Digitale Unterschrift' bzw. 'Signatur' bezeichnet. In diesem Zusammenhang kommen auch sog. 'Zertifikate' gemäß dem ITU-Standard X.509 zum Einsatz. Hierbei handelt es sich jeweils um einen von einem Trustcenter bzw. einer Certification Authority zertifizierten Public Key eines Teilnehmers. Zertifikate werden zuweilen auch in-band übermittelt, z.B. falls die Kommunikationspartner die Zertifikate der Partner noch nicht kennen oder um die Bearbeitung zu beschleunigen.

Eine Ausnahme vom Prinzip der Vertraulichkeit durch Verschlüsselung stellt das sog. hoheitliche Mithören - auch 'Lawfull Interception' genannt - dar, das von staatlichen Regulierungsbehörden und/oder Gerichten angeordnet werden kann, z.B. bei Ermittlung von Straftaten. Ein hochwertiges Sicherheitskonzept muss einen Weg vorsehen, einen bestehenden Vertraulichkeitsmechanismus wieder rückgängig zu machen, um ein staatlich angeordnetes Mithören zu ermöglichen. Dies kann z.B. durch Bekanntgabe der eingesetzten Schlüssel erfolgen. In diesem Zusammenhang wird unter 'Key Recovery' die Rekonstruktion eines verloren gegangenen Schlüssels verstanden, während die Anwendung eines Schlüssel z.B. für hoheitliches Mithören durch eine authorisierte, vertrauenswürdige dritte Instanz als 'Key Escrow' bezeichnet wird.

Leitungsorientierte Sprachnetze sind auf die Übermittlung von in der Fachwelt auch als 'Gespräch', 'Call' oder 'Session' bezeichneten kontinuierlich strömenden (Sprach-) Informationen ausgelegt. Die Übermittlung der Informationen erfolgt hierbei üblicherweise mit hoher Dienstgüte und Sicherheit. Beispielsweise ist für Sprache eine minimale - z.B. < 200 ms - Verzögerung (Delay) ohne Schwankungen der Verzögerungszeit (Delay-Jitter) wichtig, da Sprache bei Wiedergabe im Empfangsgerät einen kontinuierlichen Informationsfluss erfordert. Ein Informationsverlust kann deshalb nicht durch ein nochmaliges Übermitteln der nicht übermittelten Information ausgeglichen werden und führt im Empfangsgerät üblicherweise zu einem akustisch wahrnehmbaren Knacksen. In der Fachwelt wird die Übermittlung von Sprache verallgemeinert auch als 'Echtzeit-(Übermittlungs-)Dienst' bzw. als 'Realtime-Service' bezeichnet. Die Dienstgüte wird durch entsprechende Dimensionierung und Planung der Sprachnetze erreicht, wobei die Übermittlungskapazität selbst infolge der Leitungsorientierung grds. keinen Schwankungen unterliegt. Die Sicherheit wird beispielsweise durch entsprechende räumliche und organisatorische Abschottung der Sprachnetze gegen unbefugte Dritte bewirkt. So lag in der Vergangenheit z.B. die Zuständigkeit für Sprachnetze häufig in staatlicher Hand, wodurch z.B. ein Mithören durch Dritte weitgehend ausgeschlossen werden konnte.

Paketorientierte Datennetze sind auf die Übermittlung von in der Fachwelt auch als 'Datenpaketströme' bezeichneten Paketströmen ausgelegt. Hierbei muss üblicherweise keine hohe Dienstgüte garantiert werden. Ohne garantierte Dienstgüte erfolgt die Übermittlung der Datenpaketströme z.B. mit zeitlich schwankenden Verzögerungen, da die einzelnen Datenpakete der Datenpaketströme üblicherweise in der Reihenfolge ihres Netzzugangs übermittelt werden, d.h. die zeitlichen Verzögerungen werden umso größer, je mehr Pakete von einem Datennetz zu übermitteln sind. In der Fachwelt wird die Übermittlung von Daten deshalb auch als Übermittlungsdienst ohne Echtzeitbedingungen bzw. als 'Non-Realtime-Service' bezeichnet. Sicherheit spielt eine untergeordnete Rolle. Sie wird in kleineren Netzen wie z.B. lokalen Netzen (LAN) bzw. firmeninternen Netzen (Corporate Network - auch Virtual Private Network (VPN) genannt) meist durch räumliche Abschottung der Netze bewirkt, da man in diesen Netzen nur Teilnehmer findet, die von vornherein berechtigt sind (sog. 'friendly users').

Das zur Zeit bekannteste Datennetz ist das Internet. Das Internet ist als offenes (Weitverkehrs-) Datennetz mit offenen Schnittstellen zur Verbindung von (zumeist lokalen und regionalen) Datennetzen unterschiedlicher Hersteller konzipiert. Das Hauptaugenmerk liegt deshalb bisher auf der Bereitstellung einer herstellerunabhängigen Transportplattform. Adäquate Mechanismen zur Garantie von Dienstgüte und Sicherheit spielen eine nebengeordnete Rolle. Zur Zeit wird eine erhöhte Sicherheit deshalb vor allem mit dezentralen, an den Schnittstellen zum Internet platzierten Filtereinrichtungen - auch 'Firewalls' genannt - realisiert. Netzinterne Dienstgüte- und Sicherheitsmechanismen sind jedoch noch kaum vorhanden. Insbesondere sind Key Recovery und Key Escrow in den bekannten IP-basierten Sprach- und/oder Datennetzen unbekannt.

Im Zuge der Konvergenz von leitungsorientierten Sprach- und paketorientierten Datennetzen werden Sprachübermittlungsdienste und zukünftig auch breitbandigere Dienste wie z.B. Übermittlung von Bewegtbildinformationen, ebenfalls in paketorientierten Datennetzen realisiert, d.h. die Übermittlung der bisher üblicherweise leitungsorientiert übermittelten Echtzeitdienste erfolgt in einem konvergenten Sprach-Daten-Netz paketorientiert, d.h. in Paketströmen. Diese werden auch 'Echtzeitpaketströme' genannt. Hierbei ergibt sich das Problem, dass für eine paketorientierte Realisierung eines Echtzeitdienstes eine hohe Dienstgüte und Sicherheit erforderlich ist, damit diese mit einer leitungsorientierten Übermittlung qualitativ vergleichbar ist, während zeitgemäße Datennetze und insb. das Internet keine adäquaten Mechanismen zur Garantie einer hohen Dienstgüte und Sicherheit vorsehen (zur Definition dienstabhängiger QoS Klassen siehe auch ITU-Standard H.323 - Annex N, Draft (02/2000), "End to End QoS Control and Signalling in H.323 systems", Temporary Document 126 Rev1 (TD126rev1.doc), Study Group 16, Genf, 07.02.-18.02.2000, Appendix V, Kapitel 10.x.2.4, Table 2).

Im folgenden sei auf die Sprachübermittlung im Internet fokussiert. Dies stellt jedoch keine wesentliche Einschränkung dar, denn die Dienstgüte- und Sicherheits-Anforderungen sind nicht speziell für das Internet ausgebildet, sondern gelten allgemein für alle Typen von Datennetzen. Sie sind unabhängig von der konkreten Ausgestaltung eines Datennetzes. Die Pakete können folglich als Internet-, X.25- oder Frame-Relay-Pakete, aber auch als ATM-Zellen ausgebildet sein. Sie werden zuweilen auch als 'Nachrichten' bezeichnet, v.a. dann, wenn eine Nachricht in einem Paket übermittelt wird. Datenpaketströme und Echtzeitpaketströme sind hierbei Ausführungsbeispiele von in Kommunikationsnetzen übermittelten Verkehrsströmen. Verkehrsströme werden auch als 'Verbindungen' bezeichnet, und zwar auch in paketorientierten Netzen, in denen eine verbindungslose Übermittlungs-Technik zum Einsatz kommt. Beispielsweise erfolgen Informationsübermittlung bei TCP/IP mit Hilfe von sog. Flows, durch die Sender und Empfänger (z.B. Web Server und Browser) trotz des verbindungslosen Charakters von IP auf logisch abstrakter Ebene miteinander verbunden werden, d.h. logisch abstrahiert stellen auch Flows Verbindungen dar.

Für die Übermittlung von Sprach- und Bildinformationen über ein paketorientiertes IP-Netz (bspw. das Internet) - auch 'VoIP' genannt - sind in den internationalen Standardisierungsgremien IETF (Internet Engineering Task Force) und ITU (International Telecommunications Union) mehrere Architekturen beschrieben. Allen ist gemeinsam, dass die Call Control Ebene und die Resource Control Ebene funktional voneinander getrennt werden.

Die Call Control Ebene umfasst einen (optionalen) Call Controller, dem u.a. folgende Funktionen zugeordnet sind:
- Address Translation: Umsetzung von E.164 Telephonnummern und anderen Alias Adressen (z.B. Rechnernamen) auf Transportadressen (z.B. Internetadressen).
- Admission Control (optional): Grundsätzliche Zulässigkeitsprüfung, ob und in welchem Umfang (z.B. VoIP fähige) Einrichtungen das Kommunikationsnetz nutzen dürfen.
- Bandwidth Control (optional): Verwaltung von Übermittlungskapazitäten.
- Zone Management: Registrierung von (z.B. VoIP fähigen) Einrichtungen und Bereitstellung obiger Funktionen für alle beim Call Controller registrierten Einrichtungen.

Optional können einem Call Controller zudem folgende Funktionen fallweise zugeordnet werden:
- Call Control Signalling: Alle Signalisierungsnachrichten werden von zumindest einem Call Controller vermittelt, d.h. alle Einrichtungen schicken und erhalten Signalisierungsnachrichten nur über den Call Controller. Ein direkter Austausch von Signalisierungsnachrichten zwischen den Einrichtungen ist untersagt.
- Call Authorization: Zulässigkeitsprüfung für eingehende und ausgehende Calls.
- Bandwidth Management: Steuerung der zulässigen Anzahl von Einrichtungen, die gleichzeitig das Kommunikationsnetz nutzen dürfen.
- Call Management: Verwaltung einer Liste bestehender Gespräche, um z.B. ein Besetzzeichen erzeugen zu können, falls dies von der Einrichtung selbst nicht erzeugt werden kann.
- Alias Address Modification: Rückgabe einer modifizierten Alias Adresse, bspw. mit einer H.225.0 Nachricht ACF (Admission Confirmation). Diese Adresse muss der Endpunkt bei Verbindungsaufbau verwenden.
- Dialed Digit Translation: Übersetzung der gewählten Ziffern in eine E.164 Telephonnummer oder eine Nummer aus einem privaten Nummerierungsschema.

Die Frage einer durch den Call Controller bewirkten Bandwidth Reservation für Einrichtungen, die diese Funktion selbst nicht durchführen können, ist zur Zeit offengelassen und "for further study" (siehe H.323 Draft v4 (07/2000), Kap. 6.4).

Beispiele für Call Controller stellen der von der ITU in der H.323 Standard Familie vorgeschlagene 'Gatekeeper' oder der von der IETF vorgeschlagene 'SIP-Proxy' dar. Wird ein größeres Kommunikationsnetz in mehrere Domänen - auch 'Zonen' genannt - gegliedert, kann in jeder Domäne ein separater Call Controller vorgesehen werden. Eine Domäne kann auch ohne einen Call Controller betrieben werden. Sind mehrere Call Controller in einer Domäne vorgesehen, soll nur ein einziger von diesen aktiviert sein. Ein Call Controller ist aus logischer Sicht getrennt von den Einrichtungen zu sehen. Physikalisch muss er jedoch nicht in einer separaten Call Controller Einrichtung realisiert sein, sondern kann auch in jedem Endpunkt einer Verbindung (beispielsweise ausgebildet als H.323 Endpunkt: Endgerät, Gateway, Multipoint Control Unit, etc.) oder auch einer primär zur programmgesteuerten Datenverarbeitung ausgebildeten Einrichtung (beispielsweise: Rechner, PC, usw.) vorgesehen werden. Auch eine physikalisch verteilte Realisierung ist möglich.

Die Resource-Control-Ebene umfasst als zentrales Element einen Resource-Controller, dem u.a. folgende Funktionen zugeordnet sind:
- Capacity Control: Steuerung des dem Kommunikationsnetz durch Paketströme zugeführten Verkehrsvolumens, z.B. durch Kontrolle der Übermittlungskapazität einzelner Paketströme.
- Policy Activation (optional): ggf. für einen priorisierten Paketstrom Resourcen im Kommunikationsnetz für dessen Übermittlung reservieren.
- Priority Management (optional): Prioritätskennzeichen in den Paketen entsprechend der Priorität ihrer Paketströme setzen, kontrollieren und gegebenenfalls korrigieren, falls die Pakete bereits mit Prioritäten gekennzeichnet sind.

Der Resource Controller wird auch als 'Policy Decision Point (PDP)' bezeichnet. Er ist häufig innerhalb von sog. 'Edge Routern' - auch 'Edge Devices', 'Zugangsknoten' oder bei Zuordnung zu einem Internet Service Provider (ISP) 'Provider Edge Router (PER)' genannt - realisiert. Alternativ kann der PER auch nur als Proxy fungieren und Resource Controller relevante Informationen an einen separaten Server weiterleiten, auf dem der Resource Controller realisiert ist.

Das prinzipielle Zusammenwirken von Call Controller und Resource Controller gemäß den Protokollen der IETF und ITU (siehe H.323 Draft v4 (07/2000), Appendix II) sei am Beispiel eines Call Setup zwischen zwei als Teilnehmerendgeräte ausgebildeten VoIP Einrichtungen erläutert.

Innerhalb oder teilweise auch zeitlich vor dem eigentlichen Call Setup laufen bei Einwahl eines Endgeräts in das IP-Netz (z.B. über einen Internet Service Provider) die Schritte Authentisierung, Autorisierung und (Start des) Accounting ab.

Diese sogenannte 'AAA' Funktionalität wird üblicherweise durch den Zugriff auf eine Subscriber-Datenbank, in der alle Nutzer mit ihren Kennungen, Passwörtern, Rechten, etc. gespeichert sind, realisiert. Dieser Zugriff ist langsam und vergleichsweise komplex. In den heutigen "Best Effort" IP Netzen findet dieser AAA Vorgang normalerweise ein Mal während des Einwählens des Nutzers statt. Eine weitere Authentisierung erfolgt bei Einsatz eines Call Controllers, wenn sich das Endgerät beim Call Controller (z.B. einem SIP Proxy oder einem H.323 Gatekeeper) des Internet Service Providers registriert. Nach dem H.323 Draft v4 (07/2000) wird diese Authentisierung bzw. Registrierung eines Endgeräts beim zugeordneten Gatekeeper gemäß dem RAS (Registration, Admission, Status) Protokoll durchgeführt. Das RAS Protokoll ist im ITU-Standard H.225.0 beschrieben. Hierin ist auch ein Mechanismus vorgesehen, bei dem eine einmal vorgenommene Registrierung nach einer bestimmten Zeit verfällt und nur dann fortbesteht, wenn sie rechtzeitig wieder aufgefrischt wird (siehe z.B. H.225.0 (02/98), Kap. 7.9.1 und 7.9.2, Parameter **timeToLive** in Nachricht Registration Confirm RCF zum Setzen der Lebensdauer der Registrierung und Parameter **keepAlive** in Nachricht Registration Request RRQ zum Auffrischen, d.h. Verlängern der Lebensdauer einer bestehenden Registrierung).

Der eigentliche Call Setup beginnt üblicherweise damit, dass in einem ersten Schritt die Endgeräte der Teilnehmer ihre Fähigkeiten (z.B. Liste der unterstützten Codecs) austauschen, um die benötigten Ressourcen (z.B. Bandbreite) und die geforderte QoS (z.B. Delay, Jitter) zu bestimmen. Die Endgeräte sind bei Sprachtelephonie z.B. als IP-Telephone ausgebildet, bei Online-Video wäre eines der Endgeräte ein Content- bzw. Application-Server, z.B. im Netz des Internet Service Providers (ISP).

Der Austausch der Signalisierungsnachrichten erfolgt entweder direkt zwischen den Endgeräten oder unter Vermittlung eines Call Controllers. Hierbei ist bei jedem Call für jedes Endgerät und für jede Übertragungsrichtung individuell festgelegt, welche Variante zum Einsatz kommt. Die erste Variante wird z.B. in der H.323 Draft v4 (07/2000) als 'Direkt Endpoint Call Signalling' und die zweite als 'Gatekeeper Routed Call Signalling' bezeichnet. Bei Direct Endpoint Call Signalling können an einen Call Controller ggf. Kopien ausgewählter Signalisierungsnachrichten übermittelt werden. Ein Call-Controller hat somit häufig Kenntnis von den zwischen den Endgeräten abgestimmten Ressourcen- und QoS-Anforderungen. Diese Anforderungen werden jedoch von ihm selbst nicht aktiv beeinflusst oder verifiziert.

In einem zweiten, optionalen Schritt kann die derart abgestimmte Ressourcen- und QoS-Anforderung direkt von den Endgeräten der Teilnehmer an ihren zugeordneten Resource Controller übermittelt werden. Nach Prüfung der Ressourcen- und QoS-Anforderung wird von dem Resource Controller eine Bestätigung (oder Ablehnung) an das Endgerät zurückgeschickt.

In einem dritten, ebenfalls optionalen Schritt wird im Edge Router und gegebenenfalls weiteren Routern im Netz eine 'Policy' aktiviert, mit der diese Router prüfen und gewährleisten, dass der vom Endgerät verursachte Verkehr innerhalb der Grenzen liegt, die in der Anforderung spezifiziert wurden. Ein Beispiel für einen derartigen Reservierungsmechanismus ist RSVP (Resource reSerVation Protocol).

Zur Durchführung der drei Schritte wird eine Mehrzahl von Nachrichten versendet, die lediglich zur Abstimmung der beteiligten Komponenten untereinander, jedoch nicht zur Übermittlung der "eigentlichen Informationen" zwischen den Endgeräten dienen. Diese mit den Nachrichten übermittelten Informationen werden üblicherweise als 'Signalisierungsinformationen', 'Signalisierungsdaten' bzw. schlicht als 'Signalisierung' bezeichnet. Der Begriff ist dabei weit zu verstehen. So sind z.B. neben den Signalisierungsnachrichten auch die Nachrichten gemäß dem RAS Protokoll, die Nachrichten gemäß dem ITU-Standard H.245 zur Steuerung von Nutzkanälen bestehender Gespräche sowie alle weiteren ähnlich ausgebildeten Nachrichten umfasst. Das Signalisierungsprotokoll für den Verbindungsaufbau (Call Setup) und -abbau (Call Release) nach der ITU ist z.B. im Standard H.225.0, "Media Stream Packetization and Synchronisation on Non-Guaranteed QoS LANs", 2000 beschrieben, das nach der IETF im RFC 2453bis, "SIP: Session Initiation Protocol", draft-ietf-sip-rfc2453bis-02.txt, 09/2000. Die "eigentlichen Informationen" werden zur Unterscheidung von der Signalisierung auch 'Nutzinformationen', 'Medieninformationen', 'Mediendaten' oder schlicht 'Medien' genannt.

In diesem Zusammenhang versteht man unter 'out-of-band' die Übermittlung von Informationen (z.B. Schlüsseln) auf einem anderen Weg / Medium als den im Kommunikationsnetz zur Übermittlung von Signalisierungs- und Nutzinformationen vorgesehenen Wegen. Insbesondere ist hiervon eine lokale Konfiguration von Einrichtungen vor Ort umfasst, die z.B. mit einer lokalen Steuereinrichtung vorgenommen wird. Demgegenüber werden bei 'in-band' Informationen auf dem gleichen Weg / Medium, ggf. logisch getrennt von den betrachteten Signalisierungs- und Nutzinformationen, übermittelt.

Als Call-Aufbau wird hier also zusammenfassend das Herstellen der (Transport-) Verbindung, der Signalisierung für den Call, evtl. von Security und sonstigen Handshakes sowie der Beginn der (Voice-) Datenübermittlung verstanden. Im ITU-Standard H.323 wird ein schneller, effizienter Verbindungsaufbau mit geringer Verzögerungszeit, kurzer Roundtripzeit mit möglichst wenigen zusätzlichen Flows bzw. Handshakes auch als 'Fast Connect' bezeichnet.

Aufgrund des bisher Ausgeführten wird klar, dass eine Realisierung von VoIP nur unter folgenden Voraussetzungen akzeptiert werden wird:
- Für die Teilnehmer ist wesentlich, dass die zugehörigen Signalisierungsdaten sowie die als Sprache ausgebildeten Mediendaten im integrierten Sprach-Daten-Netz mit gleicher Dienstgüte (QoS) übermittelt werden wie im Sprachnetz.
- Für die Netzbetreiber ist wichtig, dass die vermittelten Gespräche mit gleicher Sicherheit und Qualität vergebührt werden wie im Sprachnetz.

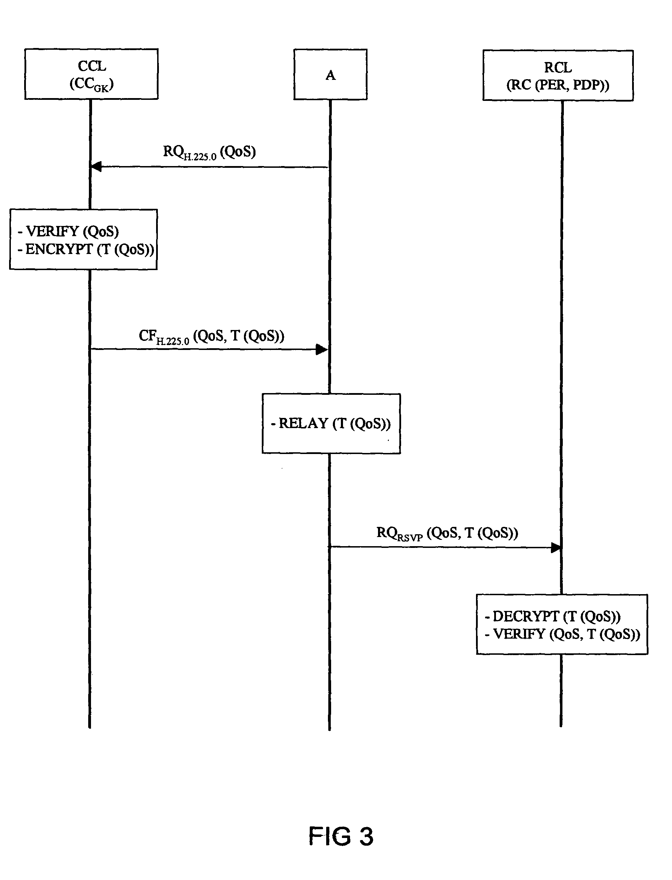

Die Frage einer durch den Call Controller bewirkten Bandwidth Reservation für Einrichtungen, die diese Funktion selbst nicht durchführen können, ist zur Zeit offengelassen und "for further study" (siehe H.323 Draft v4 (07/2000), Kap. 6.4); der Aspekt einer sicheren Vergebührung ist gar nicht angesprochen. Im Rahmen der Studienarbeiten zur QoS ist im ITU-Standard H.323 - Annex N, Draft (02/2000), "End to End QoS Control and Signalling in H.323 systems", Temporary Document 126 Rev1 (TD126rev1.doc), Study Group 16, Questions 13/16 und 14/16, Genf, 07.02.-18.02.2000, ein Mechanismus zur QoS Kontrolle mit folgenden Merkmalen offenbart:
- Die Endpunkte sind in der Lage, QoS Anforderungen sowohl für abgehenden als auch für ankommende Medienströme anzuzeigen (Annex N Draft (02/2000), Kap. 3.2, Punkt 1).
- Die Endpunkte zeigen entweder bei jedem Call eine QoS Anforderung an, oder die QoS Anforderung ist beim Service Provider voreingestellt und kann optional bei jedem Call mit einer gesonderten QoS Anforderung überschrieben werden (Annex N Draft (02/2000), Kap. 3.2, Punkt 2).
- Bei den Gatekeepern sollen sog. userspezifische QoS Profile registriert werden können. Diese dienen zur Autorisierung einer QoS Anforderung, indem sie QoS Levels festlegen, die ein bestimmter User z.B. kraft seines Vertrags mit einem bestimmten Service Provider anfordern darf (Annex N Draft (02/2000), Kap. 3.3, Punkt 1).
- Die Gatekeeper sollen feststellen können, ob die QoS Anforderung eines Endpunkts erfüllt werden kann (Annex N Draft (02/2000), Kap. 3.3, Punkt 3).
- Die Gatekeeper sollen in der Lage sein, durch (direkte) Kommunikation mit den QoS Mechanismen des Transportnetzes (d.h. der Resource Control Ebene) die Fähigkeit des Transportnetzes zu aktivieren, QoS Anforderungen zu unterstützen; Transportnetze zu instruieren, spezifische Verbindungen entsprechend vorgegebener QoS Anforderungen aufzubauen; geeignete Authorisierungen zur Verfügung zu stellen. Hierbei wird in einer Fußnote des Editors ausgeführt, dass eine indirekte Steuerung durch den Gatekeeper über den Endpunkt ein alternativer Ansatz wäre, der überlegenswert sein könnte. Es wird jedoch nicht weiter ausgeführt, welche Steuerung hiermit gemeint ist, noch werden Hinweise gegeben, wie diese indirekte Steuerung ausgestaltet sein könnte (Annex N Draft (02/2000), Kap. 3.3, Punkt 6).
- Der Gatekeeper soll hierbei festlegen, ob die QoS Anforderung eines Endpunkts innerhalb der Grenzen seines QoS Profils liegt und in Abhängigkeit hiervon die Authorisierung zum Aufbau einer Verbindung erteilen oder verweigern (Annex N Draft (02/2000), Kap. 3.3, Punkt 7).
- Der H.323 Mechanismus zur QoS Kontrolle enthält folgende Funktionseinheiten: End Point QoS Entity (EPQoSE) zur Anforderung eines erwünschten QoS Levels; QoS Policy Entity (QoSPE) zum Management von Policies und zur Authorisierung von QoS Levels; QoS Service Manager (QoSM) zur Vermittlung von QoS Anforderungen gemäß der vom QoSPE festgelegten Policy; Resource Manager (RM) zur Anwendung einer Menge von Policies und Prozeduren auf eine Menge von Transport Resourcen mit dem Ziel, dass die hierdurch zugeteilten Resourcen ausreichend sind, um die angeforderte QoS innerhalb der unter Kontrolle des RM stehenden Domäne zu garantieren (Annex N Draft (02/2000), Kap. 4.3).
- EPQoSE ist innerhalb von Endpunkten, QoSM und QoSPE innerhalb von H.323 Domänen, und RM innerhalb von Transport Domänen angeordnet. EPQoSE, QoSM und QoSPE sind der Call Control Ebene, RM der Resource Control Ebene zugeordnet. Das Beziehungensgeflecht zwischen diesen Funktionseinheiten sieht einen zentralen QoSM vor, mit dem EPQoSE, QoSPE und RM jeweils bilateral in Beziehung stehen. Zwischen EPQoSE, QoSPE und RM sind jedoch keine direkten Beziehungen vorgesehen (Annex N Draft (02/2000), Kap. 4.3, Figur 3).

Es treten jedoch bei der technischen Umsetzung in einem integrierten Sprach-Daten-Netz wie z.B. dem Internet folgende Probleme auf, die bisher weder in den Standards und Drafts der IETF und/oder ITU, noch in bekannt gewordenen Implementierungen nicht oder nur unzureichend gelöst sind:
P1. Wie kann der PER (RC, PDP) die Authentisierung und Autorisierung der Ressourcen- und QoS-Anforderung ***effizient*** durchführen, obwohl die Anforderung dynamisch pro Call und Nutzer erfolgt? Erschwerend kommt hinzu, dass die Reservierung im PER und weiteren Routern üblicherweise "soft" ist, also in regelmäßigen zeitlichen Abständen (Größenordnung: Sekunden) aufgefrischt werden muß, z.B. indem die Anforderung erneut an die Resource-Control-Ebene gesendet wird. Authentisierungs- und Autorisierungs-Mechanismen, die sehr spezifisch auf eine Applikation oder einen Nutzer zugeschnitten sind bzw. sehr viel Rechenzeit im PER (RC, PDP, etc.) bedürfen, scheiden von vornherein aus (Skalierungsproblem, Echtzeitproblem). Der PER und die anderen Router des ISPs besitzen heute keine nutzerbezogenen Informationen und werden diese auch in Zukunft nicht besitzen, da die ihnen zugewiesene Aufgabe im wesentlichen darin besteht, IP-Pakete zu routen und entsprechend der Policies zu priorisieren.
P2. Wie lassen sich Authentisierung und Autorisierung so ***sicher*** durchführen, dass man darauf aufbauend eine Vergebührung durchführen kann (im Sprachnetz beruht das Vergebührungsmodell ganz oder zum Teil auf den reservierten Ressourcen, unabhängig von ihrer tatsächlichen Nutzung)? Deutlich geringere Sicherheitsanforderungen treten auf, wenn lediglich die gesamte Ressourcenreservierung überprüft werden soll, um Überlast im Netz zu verhindern. Sicherheit ist auch notwendig, da beide Nutzer, die am Call teilnehmen, Ressourcen- und QoS-Anforderungen absenden, aber gegebenenfalls nur einer von beiden vergebührt werden soll.
P3. Wie kann bei Einsatz eines Call Controllers gewährleistet werden, dass die Endgeräte der Nutzer die ***korrekte,*** d.h. vom Call Controller bestätigte Ressourcen- und QoS-Anforderung an die Resource Control Ebene senden? Die an der Verbindung beteiligten Endgeräte könnten aufgrund von Missbrauch oder technischem Fehlverhalten jeweils beliebige Anforderungen absenden!
P4. Wie wird das ***konsistente Auslösen*** der Ressourcen- und QoS-Anforderungen der beiden Endgeräte gewährleistet, obwohl sie in aller Regel vollkommen unterschiedliche PERs ansprechen? So könnte beispielsweise, obwohl der rufende und das Gespräch zahlende Teilnehmer das Gespräch bereits beendet hat, der gerufene Teilnehmer auf seiner Seite die Reservierung bis zu seinem Gateway weiterhin aufrechterhalten und unter Angabe einer anderen IP-Adresse noch Daten von einem Server laden. Diese Daten könnte das Gateway noch dem vorigen Gespräch zurechnen, d.h. ggf. auch der Vergebührung, wenn diese z.B. auf der Menge übermittelter Daten basiert. Dies ist bereits für zwei PER eines ISPs ein Problem, noch schwieriger wird es im Interdomain Fall mit PERs von verschiedenen ISPs. Es ist evident, dass eine Lösung dieser Probleme essentiell für die praktische Einsatzfähigkeit der von IETF und ITU vorgeschlagenen Konzepte ist und mithin die Netzarchitektur wesentlich bestimmt.

Die o.g. Probleme werden bisher nicht adäquat (d.h. mit Ansätzen, die genauso generisch wie die Architektur-Konzepte selbst sind) gelöst. Entweder werden proprietäre Lösungen eingesetzt, die nicht verallgemeinerbar sind, da sie z.B. Netzelemente eines bestimmten Herstellers voraussetzen, oder den Problemen P1-P4 wird durch Einschränkungen bei der Flexibilität, Dynamik oder Leistungsfähigkeit der Ressourcenreservierung und QoS-Sicherstellung ausgewichen. Unter bestimmten Bedingungen treten die o.g. Probleme auch gar nicht erst auf, so z.B. in kleineren Firmennetzen, bei denen man von Nutzern ("friendly users") ausgehen kann, die von vornherein berechtigt sind (d.h. keine Authentisierung und Autorisierung), das IP-Netz nur zu den dafür vorgesehenen Zwecken nutzen (d.h. kein Policing) und für die z.B. infolge einer internen Verrechnung der Netz-Kosten keine Vergebührung anfällt (d.h. kein Accounting).

Ein proprietärer Ansatz wird z.B. im Projekt Aquila der Europäischen Union verfolgt: Der Nutzer hat auf seinem Endgerät (z.B. einem PC) eine Applikation, mit der der Ressourcenbedarf angemeldet werden kann. Die Ressourcen-Anforderung wird von einem speziellen RC-Server im Netz bearbeitet, der die Berechtigung des Nutzers (Authentisierung und Autorisierung) mit Hilfe einer Datenbankabfrage feststellt. Nachteil ist hier die proprietäre Applikation sowie die zusätzliche Datenbankabfrage, die generell sehr langsam und dynamisch aufwendig ist, sowie entweder einen weiteren Zugriff (neben dem bei der Einwahl des Nutzers) auf die AAA-Datenbank des ISPs erfordert (dies stellt unerwünschtes Sicherheitsrisiko dar, falls ISP und Betreiber des Call Controllers nicht identisch sind) oder eine zweite Datenbank voraussetzt, die konsistent mit der AAA-Datenbank sein muss. Ungünstig ist außerdem, dass für die Vergebührung eine Korrelation der Daten des Call Controllers mit den Daten aus dem RC-Server im Postprocessing stattfinden muss. Ein 'Hot-Billing' (d.h. Gebühreninformation während des Calls) ist damit ausgeschlossen. Eine gesicherte Authentisierung des Nutzers findet auch nur ein Mal während der ersten Reservierung statt, da anschließend mit einer statischen Policy im PER gearbeitet wird. Damit weicht man von dem Prinzip der soften Reservierungen in den Routern ab, das von der IETF mit dem Protokoll RSVP vorgeschlagen wurde. Damit bleiben bei diesem Ansatz die Probleme P1, P3 und P4 ungelöst.

Die Firma QoS Networks, Dublin, Irland, realisiert zur Zeit ein QoS fähiges IP-Netz. Dabei werden die Policy Einstellungen vom ISP statisch vorgenommen (also keine dynamische Reservierung von Ressourcen). Dies ist ein für Firmenkunden akzeptables Angebot, da der Ressourcenbedarf innerhalb der Firma geklärt werden kann, das Anforderungsprofil aufgrund der Aggregation des gesamten Firmenverkehrs zeitlich ungefähr konstant ist und die Autorisierung der Nutzer entfallen kann, da nur Firmenmitarbeiter Zugang zum Netz haben. Für ISPs, die Privatkunden oder SOHO (Single Office Home Office) Kunden QoS-fähige Netze anbieten wollen, ist dies jedoch keine Lösung. Die Probleme P1 bis P4 bleiben ungelöst, da entsprechende Einschränkungen in diesem speziellen Geschäftsmodell nicht besonders nachteilig sind bzw. keine technische Lösung bieten.

Die Aufgabe der Erfindung liegt darin, eine adäquate Lösung für mindestens eines der Probleme P1 bis P4 zu finden. Diese Aufgabe wird durch die Merkmale des Patentanspruchs 1 gelöst.

Mit dieser Lösung sind eine Vielzahl von Vorteilen verbunden:
- Eine erneute komplexe und dynamisch anspruchsvolle Authentisierung und Autorisierung der QoS Anforderung in der Resource Control Ebene kann entfallen, da diese erfindungsgemäß mit Hilfe des entschlüsselten Tokens bewirkt wird. Nutzerdatenbanken müssen nicht repliziert werden bzw. müssen nicht auf die Bearbeitung zusätzlicher, periodisch erfolgender Abfragen ausgelegt sein. Der gemeinsame Besitz eines Geheimnisses in der Call Control Ebene und der Resource Control Ebene ermöglicht die Verwendung eines symmetrischen Verschlüsselungsverfahrens. Diese Verfahren sind dynamisch deutlich schneller als asymmetrische Verfahren. Zusammengefasst ist festzustellen, dass die Erfindung an sich bereits sehr ***effizient*** ist. Das Geheimnis besteht unabhängig von einem speziellen Nutzer, einem speziellen Call, einer QoS Anforderung oder späteren periodischen Auffrischungsanforderungen. Der administrative Aufwand für die Verwaltung der Geheimnisse ist damit minimal und wächst nicht mit der Zahl der Nutzer eines ISP. Die Aufnahme eines einheitlich arbeitenden Verschlüsselungsverfahrens in die Call Control Ebene (z.B. Gatekeeper) und die Resource Control Ebene (z.B. PER) ist technisch einfach. Somit ist auch die Verwaltung und Realisierung erfindungsgemäßer Vorrichtungen (Call Controller, Resource Controller) und Anordnungen ***effizient -*** Problem P1.
- Die Verwendung eines Verschlüsselungsverfahrens zur Verund Entschlüsselung der Token ist nicht nur technisch, sondern auch rechtlich ***sicher.*** Bei einer ausreichend gut verschlüsselten Anforderung kann damit sogar eine Vergebührung erfolgen - Problem P2.
- Indem die in der Call Control Ebene verifizierte QoS Anforderung bei Bildung des verschlüsselten Tokens berücksichtigt wird und somit der Resource Control Ebene nach Entschlüsselung des Tokens bekannt ist, kann bei entsprechender Berücksichtigung (z.B. Integration der verifizierten QoS Anforderung oder zumindest von wesentlichen Teilen der verifizierten QoS Anforderung) vorteilhaft eine Verfälschung der zwischen den Endgeräten vermittelten Anforderung und den tatsächlich von den Endgeräten abgesandten Anforderungen ohne wirklichen Mehraufwand (d.h. effizient) ausgeschlossen werden. Die QoS Anforderung ist damit auch ***korrekt -*** Problem P3.
- Die Lösung ist vollkommen standardkonform, sie benötigt keinerlei zusätzliche proprietären Protokolle oder Nachrichten. Die Erfindung ist generisch und konzeptionell interoperabel, da sie unabhängig von einer konkreten Lösung ist. Sie lässt sich sowohl auf H.323 Netze als auch auf SIP Netze anwenden. Dies macht die Erfindung zu einer umfassenden Lösung sowohl bei H.323, als auch bei SIP. Dies ist wichtig und somit besonders vorteilhaft, da, wie die Vergangenheit gezeigt hat, der Markt herstellerspezifischen Lösungen wenig Akzeptanz entgegenbringt.
- Das Verschlüsselungsverfahren muss nur einheitlich für die Call Control Ebene und die Resource Control Ebene gewählt werden. Die Endpunkte bleiben hiervon unberührt. Die Lösung erlaubt daher die Interoperabilität mit unterschiedlichen Applikationen auf dem Nutzerendgerät.
- Das Verschlüsselungsverfahren kann verbessert werden (neues Verfahren, längerer Schlüssel, verschärfte gesetzliche Forderungen, etc.), indem ein ISP lediglich an seinem PER (RC, PDP, etc.) und Call Controller (evtl. auch im Besitz einer anderen Firma) ein Update vornimmt. Vorteilhaft bleiben hiervon wiederum die Endpunkte bzw. die darauf ablaufenden Applikationen unberührt.

Gemäß einer Ausgestaltung der Erfindung wird von der Call Control Ebene wiederholt, insbesondere regelmäßig im Abstand von Sekunden wiederholt, ein Token an den Endpunkt übermittelt und von dort an die Resource Control Ebene weitergeleitet - Anspruch 2. Insbesondere ist in das verschlüsselte Token eine in ihrem Wert variable Information, insbesondere eine Zufallszahl und/oder ein Zeitstempel, eingearbeitet - Anspruch 3. Wird die QoS Anforderung in der Call Control Ebene um eine dynamisch bestimmte Zufallszahl erweitert, dann kann vorteilhaft auch jede Auffrischungsnachricht mit ein und demselben Schlüssel verschlüsselt bzw. entschlüsselt werden. Wird in die verschlüsselte QoS Anforderung ein Zeitstempel eingefügt, dann wird vorteilhaft sichergestellt, dass der Endpunkt diese verifizierte Anforderung nicht verzögern oder speichern kann, um sie zu einem späteren Zeitpunkt weiterzuleiten (Betrugsaspekt: Während der Nacht, wenn niedrige Tarife gelten, werden verschlüsselte Anforderungen gesammelt, die am Tage bei hohen Tarifen verwendet werden). Besonders vorteilhaft ist, dass ein weiteres Aufrechterhalten der (soften) Reservierung durch einen der Endpunkte ausgeschlossen ist, wenn der andere die Informationsübermittlung beendet hat. Von der Call Control Ebene werden in diesem Fall keine weiteren Tokens versendet. Somit werden der PER eines ISP und die anderen Router im Netz die für eine Informationsübermittlung mit der garantierten QoS erforderliche Ressourcenreservierung aufheben (auslösen). Ein besonders schöner Vorteil liegt hierbei darin, dass die Resource Control Ebene für dieses ***konsistente Auslösen*** keinerlei Kenntnis von den Applikationen haben muss, die den IP-Verkehr von bzw. zu den Endpunkten verursachen (Beispiel: Der Nutzer führt während seines Surfens im Internet ein IP-Telefonat durch. Die Router wissen a priori nicht, wann spezielle Ressourcen für den Real-Time-Sprachverkehr reserviert werden müssen und wann Best-Effort für den Nutzer genügt) - Problem P4.

Schöne Verteile sind auch damit verbunden, das verschlüsselte Token zwischen dem Endpunkt und der Call Control Ebene und/oder zwischen dem Endpunkt und der Resource Control Ebene in vorhandenen Signalisierungsnachrichten, insbesondere Keep-Alive Nachrichten und Nachrichten zur Auffrischung der QoS Anforderung, zu übermitteln - Anspruch 4. Wenn vorhandene (Signalisierungs-/Reservierungs-) Meldungen genutzt werden, treten keine neuen Nachrichten im Netz auf. Des weiteren werden die zusätzlich eingefügten verschlüsselten Anforderungen keine Auswirkung auf Netzelemente haben (Transparenz), die nicht an dieser Technik beteiligt sind: diese reagieren wie bisher nur auf den ursprünglichen Anteil der Meldungen (Interoperabilität mit Legacy-Netzelementen).

Besonders schöne Vorteile ergeben sich, wenn von der Call Control Ebene bei erfolgreicher Verifikation der QoS Anforderung ein Accounting für die Informationsübermittlung gestartet wird - Anspruch 5 - und ggf. nach Abschluss der Informationsübermittlung das Accounting und die Übermittlung von verschlüsselten Tokens an den Endpunkt beendet wird - Anspruch 6. Da die Call Control Ebene den Beginn und auch das Ende des Calls (getriggert durch Aktionen der Endpunkte, z.B. Auflegen des Telefonhörers) steuert, kann die Vergebührung nicht nur sicher, sondern auch zeitlich präzise erfolgen - vgl. auch Problem P2.

Die Erfindung zeichnet sich durch eine besondere Effizienz aus, wenn die Verschlüsselung und Entschlüsselung mit Hilfe eines symmetrischen Geheimnisses, insbesondere einem symmetrischen Schlüssel, bewirkt wird - Anspruch 7.

Weitere vorteilhafte Ausgestaltungen der Erfindung ergeben sich aus den unter- oder nebengeordneten Ansprüchen.

Die Erfindung wird im folgenden anhand von Ausführungsbeispielen, die in den Figuren dargestellt sind, näher erläutert. Es zeigt hierbei:
- Figur 1: eine Anordnung zur Durchführung des erfindungsgemäßen Verfahrens mit einer Call Control Ebene, einer Resource Control Ebene sowie zwei Endpunkten einer Informationsübermittlung
- Figur 2: eine beispielhaft detaillierter ausgeführte Ausgestaltung der Anordnung nach Figur 1 mit Programmen zur Durchführung des erfindungsgemäßen Verfahrens
- Figur 3: ein Ablaufdiagramm, in dem eine Ausführung des erfindungsgemäßen Verfahrens exemplarisch aufgezeigt ist

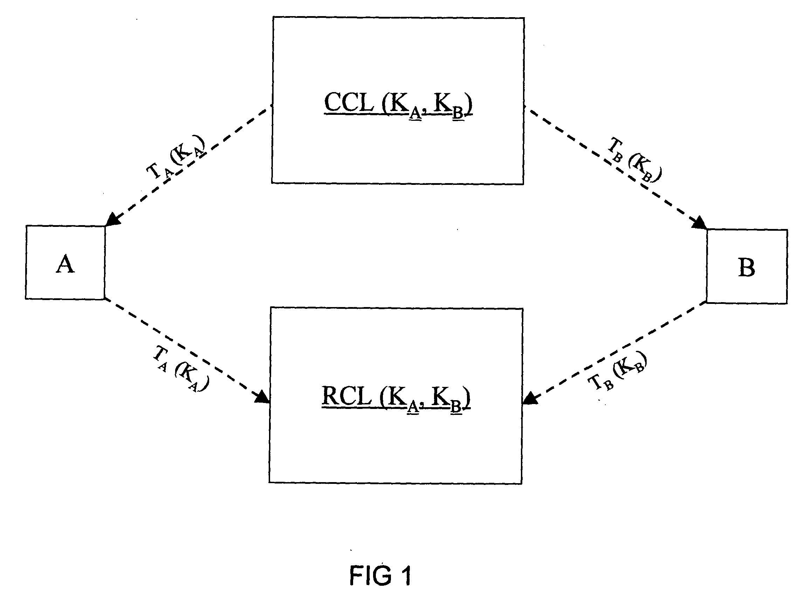

In Figur 1 ist eine beispielhafte Anordnung zur Durchführung des erfindungsgemäßen Verfahrens dargestellt, die als Kommunikationsnetz mit einer Call Control Ebene CCL, einer Resource Control Ebene RCL sowie zwei Endpunkten A, B einer Informationsübermittlung ausgeführt ist. In beiden Ebenen CCL, RCL kommen Geheimnisse zur Anwendung, die als symmetrische Geheimnisse K_{A}, K_{B} ausgebildet sind. Weiterhin sind zwei Token T_{A}, T_{B} dargestellt. Token T_{A} (bzw. T_{B}) ist hierbei zur mit Geheimnis K_{A} (bzw. K_{B}) verschlüsselten Übermittlung von der Ebene CCL über den Endpunkt A (bzw. B) an die Ebene RCL vorgesehen.

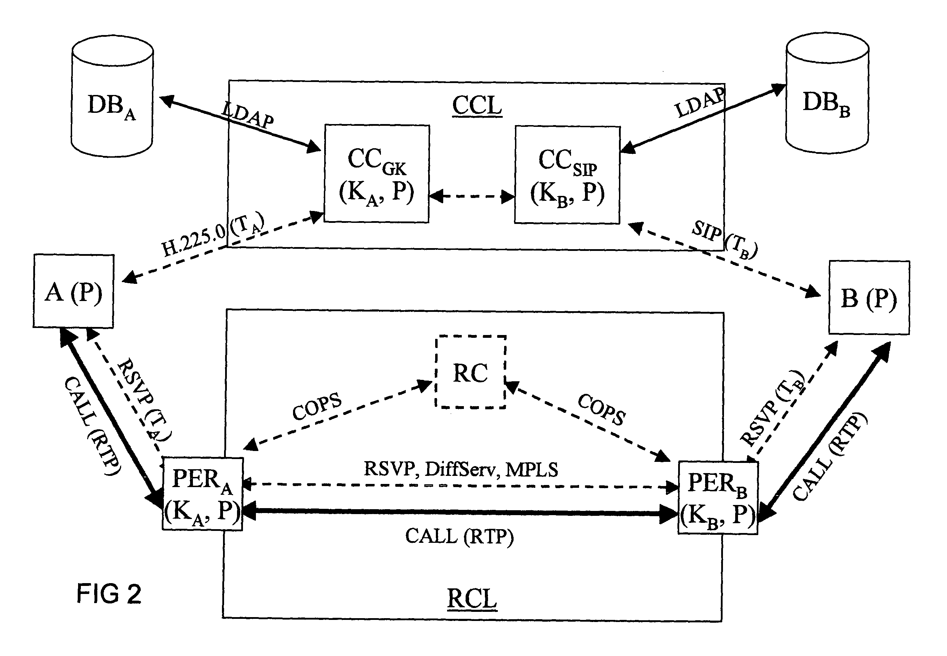

In Figur 2 ist eine detaillierte Ausgestaltung der Anordnung nach Figur 1 dargestellt. Es sei betont, dass die hierbei aufgezeigten Ausführungen dabei trotz ihre teilweisen detailgetreuen Darstellung lediglich beispielhafter Natur und nicht einschränkend zu verstehen sind. In dieser Ausgestaltung umfasst die Ebene CCL zwei Call Controller CC, wobei der dem Endpunkt A zugeordnete Call Controller CC als Gatekeeper CC_{GK} und der dem Endpunkt B zugeordnete Call Controller CC als SIP-Proxy CC_{SIP} ausgebildet ist. Dem Gatekeeper CC_{GK} ist eine Nutzerdatenbank DB_{A} und dem SIP-Proxy CC_{SIP} eine Nutzerdatenbank DB_{B} zur Verifikation von Nutzern und deren Rechten zugeordnet, auf die z.B. mit dem Protokoll LDAP (Lightweigth Directory Access Protocol) zugegriffen wird. Im Gatekeeper CC_{GK} ist das Geheimnis K_{A}, im SIP-Proxy CC_{SIP} das Geheimnis K_{B} vorgesehen. Zwischen den beiden Call Controllern CC werden ggf. Signalisierungsnachrichten ausgetauscht. Die Ebene RCL umfasst einen zentralen Resource Controller RC. Diesem sind zwei Edgerouter PER_{A}, PER_{B} zur Übermittlung von Informationen in einem Kommunikationsnetz zugeordnet. Im Edgerouter PER_{A} ist das Geheimnis K_{A}, im Edgerouter PER_{B} das Geheimnis K_{B} vorgesehen. Zwischen dem Resource Controller RC und den Edgeroutern PER kommt ein Protokoll COPS (Common Open Policy Server) zum Ablauf. Weiterhin kommt zwischen dem Endpunkt A und dem Gatekeeper CC_{GK} ein Protokoll H.225.0, zwischen dem Endpunkt A und dem Edgedevice PER_{A} sowie dem Endpunkt B und dem Edgedevice PER_{B} ein Protokoll RSVP (Resource Reservation Protocol) und zwischen dem Endpunkt B und dem SIP-Proxy CC_{SIP} ein Protokoll SIP (Session Initiation Protocol) zur Anwendung. In den standardisierten Nachrichten der Protokolle H.225.0, SIP, RSVP werden jeweils die Token T_{A}, T_{B} übermittelt. Zwischen den Edgedevices PER_{A} und PER_{B} kommt zumindest eines der Protokolle RSVP, DiffServ oder MPLS zum Einsatz. Zwischen den Endpunkten A und B ist ein Gespräch CALL aufgezeigt, für dessen qualitativ hochwertige Durchführung eine Informationsübermittlung mit einer garantierten QoS erforderlich ist. Die Informationen werden im Kommunikationsnetz durch ein Protokoll RTP (Real Time Protocol) übermittelt. Das Kommunikationsnetz ist beispielsweise als IP-Netz ausgebildet. Für den einschlägigen Fachmann ist offensichtlich, dass die Erfindung selbstverständlich in weiteren Netztypen zum Einsatz kommen kann wie z.B. Internet, Intranet, Extranet, einem lokalen Netz (Local Area Network - LAN) oder einem, z.B. als Virtuelles Privates Netz (VPN) ausgebildeten firmeninternen Netz (Corporate Network). In den Endgeräten A und B, den Call Controllern CC und den Edgedevices PER sind erfindungsgemäße Computerprogrammprodukte P vorgesehen, die jeweils Softwarecodeabschnitte zur prozessorgestützten Ausführung des erfindungsgemäßen Verfahrens umfassen. Optional können dabei Teile der Computerprogrammprodukte P auch auf spezieller Hardware (z.B. Krypto-Prozessoren) ablaufen.

In Figur 3 ist eine Ausführung des erfindungsgemäßen Verfahrens am Beispiel eines rudimentär dargestellten Aufbaus (Call Setup) eines Gesprächs CALL gemäß der H.323 Standard Familie der ITU mit Hilfe eines Ablaufdiagramms dargestellt. In dem Diagramm sind standardisierte (Signalisierungs-) Nachrichten RQ_{H.225.0}, CF_{H.225.0} zum Austausch von Signalisierungsdaten zwischen dem Endpunkt A und der Ebene CCL sowie eine (Signalisierungs-) Nachricht RQ_{RSVP} zur Anforderung einer QoS von der Ebene RCL aufgezeigt, die zum Teil derart modifiziert sind, dass das erfindungsgemäße Verfahren zur Ausführung kommt. Die Nachricht RQ_{RSVP} ist dem standardisierten Protokoll RSVP entnommen, das bei der IETF für die Übermittlung von Ressourcenund QoS-Anforderungen RQ zwischen Endgeräten A, B bzw. von Endgeräten A, B ins (IP-) Netz entwickelt wurde.

Im weiteren wir als Beispiel das erfindungsgemäße Verhalten und Zusammenwirken des Gatekeepers CC_{GK}, des Endpunkts A und des Edgedevices PER_{A} ausgeführt. Die erfindungsrelevanten Informationen werden in entsprechend modifizierten (Signalisierungs-) Nachrichten der Protokolle H.225.0 und RSVP übermittelt. Dem Fachmann ist hierbei klar, dass der Call Controller CC beliebig ausgebildet sein könnte, insbesondere auch als SIP-Proxy CC_{SIP}. Diese Ausführung ist in Figur 2 für den Endpunkt B angedeutet.

Zunächst wird das Endgerät A bei dem Gatekeeper CC_{GK} registriert. Die Registrierung wird von dem Endgerät A durch einen H.225.0 Registration Request RRQ beantragt und von dem Gatekeeper CC_{GK} mit einer H.225.0 Registration Confirmation RCF oder mit einer H.225.0 Registration Reject RRJ beantwortet. In der Nachricht RRQ könnte bereits eine generelle QoS Anforderung RQ enthalten sein, die für alle folgenden Gespräche CALL allgemeine Gültigkeit haben soll. Vom Gatekeeper CC_{GK} wird dann der Endpunkt A und ggf. die QoS Anforderung RQ verifiziert, d.h. authentisiert, autorisiert, etc... Hierzu wird auf nutzerspezifische Daten, die z.B. in einer Datenbank DB_{A} abgelegt sind, mit Hilfe des Protokolls LDAP oder eines anderen DB-Abfrageprotokolls zugegriffen. Diese Daten können auch eine maximal zulässige QoS Anforderung RQ umfassen, die sich z.B. nach dem Vertrag des Nutzers mit seinem ISP bestimmen könnte. Ggf. ist nun bereits die zulässige, aktuelle QoS Anforderung RQ ermittelt. Diese könnte dann bereits in der Nachricht RCF an den Endpunkt A übermittelt werden.

Weiterhin wird vom Gatekeeper CC_{GK} auch festgelegt, ob das Call Signalling von ihm selbst vermittelt werden soll (Gatekeeper Routed Call Signalling) oder direkt zwischen den Endpunkten A, B (Direct Endpoint Call Signalling), ggf. mit Benachrichtigungen an den Gatekeeper CC_{GK} zu wesentlichen Änderungen. An diese Festlegungen sollen sich die Endpunkte A, B zwar halten; will man das Kommunikationsnetz jedoch vor Fehlverhalten der Endpunkte A, B schützen, müssen zusätzliche Sicherungsmechanismen vorgesehen werden.

Nach Registrierung beider Endpunkte A, B ist ein Call Signalling, insb. ein Call Setup, zwischen den beiden Endgeräten A, B grundsätzlich möglich. Dieser wird z.B. von dem Endpunkt A initiiert, indem mit einem H.225.0 Admission Request ARQ der Aufbau eines Gesprächs CALL zum Endpunkt B beim Gatekeeper CC_{GK} beantragt wird. Dieser ARQ könnte wiederum eine QoS Anforderung RQ enthalten. Vom Gatekeeper CC_{GK} wird hierauf eine auf das Gespräch CALL bezogene Authentisierung und Autorisierung durchgeführt. Diese umfasst auch eine Ermittlung der QoS Anforderung RQ. Diese kann z.B. auch durch eine mittels weiterer H.225.0 Nachrichten bewirkte Capability Negotiation zwischen den beiden Endpunkten A, B ermittelt werden. Beim Gatekeeper Routed Call Signalling ist diese dann dem Gatekeeper CC_{GK} unmittelbar bekannt. Beim Direct Endpoint Call Signalling könnte sie dem Gatekeeper CC_{GK} mitgeteilt werden. Die ermittelte QoS Anforderung RQ wird vom Gatekeeper CC_{GK} verifiziert.

Vom Gatekeeper wird nun unter Berücksichtigung der verifizierten QoS Anforderung RQ zumindest ein mit Hilfe des Geheimnisses K_{A} verschlüsseltes Token T gebildet. In dieses Token T fließen z.B. nutzerbezogene Daten (z.B. IP-Adresse, Portnummer, etc.) sowie alle oder ein wesentlicher Teil der Ressourcen- und QoS-Anforderungsdaten ein. Gemäß einer Variante der Erfindung werden bei der Bildung des Tokens T auch in ihrem Wert variable Informationen berücksichtigt, z.B. Zufallszahlen oder Zeitstempel. Optional wird eine Vergebührung des Gesprächs CALL gestartet. Das verschlüsselte Token T wird an den Endpunkt A übermittelt, z.B. in einer H.225.0 Nachricht ACF (Admission Confirmation). Das derart übermittelte Token T wird im Endpunkt A der Nachricht ACF entnommen und zwischengespeichert. Von dem Endgerät B wird dem Gatekeeper CC_{GK} die Annahme des Gesprächs CALL mit einer Nachricht CONNECT angezeigt. Vom Gatekeeper CC_{GK} könnte das Token T in eine Nachricht CONNECT eingefügt werden, die von dem Gatekeeper GK an das Endgerät A zur Anzeige des erfolgreichen Call Setup übermittelt wird.

Im Anschluss wird vom Endpunkt A das verschlüsselte Token T in eine ansonsten unveränderte standardisierte RSVP QoS Anforderung RQ eingefügt und an das Edgedevice PER_{A} übermittelt. Vom Edgedevice PER_{A} wird das verschlüsselte Token T mit Hilfe des Geheimnisses K_{A} entschlüsselt und sodann zur Verifikation der Korrektheit der QoS Anforderung RQ genutzt. Sofern nicht bereits zuvor zwischen Gatekeeper CC_{GK} und Resource Controller RC eine Abstimmung stattgefunden hat, wird nun vom Edgedevice eine weitere Verifikation der QoS Anforderung RQ durchgeführt. Hierzu wird z.B. über das standardisierte Protokoll COPS eine Abfrage an den Resource Controller RC gesendet. Dieser prüft, ob die angeforderte QoS im Kommunikationsnetz bereitgestellt werden kann. Der Resource Controller RC muß hierzu lediglich die gesamten vorhandenen (bzw. belegten) Ressourcen im Kommunikationsnetz kennen, um eine Antwort auf die COPS Abfrage senden zu können. Die Berechtigung des Nutzers für das Gespräch CALL selbst wurde bereits vom Gatekeeper CC_{GK} festgestellt. Bei dieser Variante sind kein Interface und keine Nachrichten zwischen Resource Controller RC und Gatekeeper CC_{GK} sowie zwischen Resource Controller RC und (Nutzer-) Datenbank DB erforderlich.

Nach Empfang der Antwort des Resource Controllers RC reagiert das Edgedevice PER_{A} wie folgt: Entweder wird die QoS Anforderung RQ wegen Überlast im Kommunikationsnetz oder wegen fehlgeschlagener Verifikation unter Berücksichtigung des Tokens T abgelehnt oder die angeforderte QoS wird im Kommunikationsnetz konfigurativ eingestellt, z.B. durch dynamische Aktivierung einer Policy oder alternativ zur RSVP Terminierung im Edgedevice PER_{A} durch Weiterleiten der RSVP Reservierung durch das Netz bis zum anderen Edgedevice PER_{B} oder Endpunkt B. Für die hier vorgestellte Lösung ist dies jedoch nicht relevant.

Nach Erhalt einer positiven RSVP Antwort vom Edgedevice PER_{A} beginnt der Endpunkt A mit der Informationsübermittlung. Hierbei werden die Signalisierungsdaten z.B. entsprechend einem Real Time Control Protocol (RTCP) und die Mediendaten z.B. entsprechend einem Real Time Protocol (RTP) übermittelt. Während der Dauer des Gesprächs CALL ist die QoS nun spezifisch für dieses Gespräch CALL, die Nutzer und entsprechend der Berechtigung der Nutzer sowie der Lastsituation im Netz des ISP gewährleistet.

Zur weiteren Erhöhung der Sicherheit wird dem Endpunkt A wiederholt ein geändertes Token T übermittelt. Beispielsweise erfolgt dies in regelmäßigem Abstand von einigen wenigen Sekunden. Besonders schöne Vorteile ergeben sich hierbei, wenn zur Übermittlung dieser Token T ebenfalls bestehende Nachrichten genutzt werden können. Beispielsweise können während eines Gesprächs CALL der Endpunkt A und der Gatekeeper CC_{GK} über regelmäßig ausgetauschte Keep Alive Nachrichten in ständiger Verbindung stehen (siehe hierzu H.225.0 (02/98), Kap. 7.9.1 und 7.9.2, Parameter **timeToLive** in Nachricht Registration Confirm RCF zum Setzen der Lebensdauer der Registrierung und Parameter **keepAlive** in Nachricht Registration Request RRQ zum Auffrischen, d.h. Verlängern der Lebensdauer einer bestehenden Registrierung). Üblicherweise ist die Periode dieser Keep Alive Nachrichten regelmäßig und liegt im Sekundenbereich. In diesen Nachrichten können erneut verschlüsselte Token T mitgegeben werden, so dass der Endpunkt A wiederholt verschlüsselte Token T zum Auffrischen von "soften" Reservierungen im Kommunikationsnetz zu Verfügung gestellt bekommt.

Eine besondere hohe Sicherheit wird durch Integration von in ihrem Wert variablen Informationen, z.B. Zufallszahlen und/oder Zeitstempeln, in die verschlüsselten Token T erreicht. Hierbei kann vorteilhaft auch jede Auffrischungsnachricht mit ein und demselben Geheimnis K verschlüsselt bzw. entschlüsselt werden. Wird in die verschlüsselte QoS Anforderung RQ ein Zeitstempel eingefügt, dann wird zudem sichergestellt, dass der Endpunkt A die Token T nicht verzögern oder speichern kann, um es zu einem späteren Zeitpunkt weiterzuleiten. Somit wird ausgeschlossen, dass während der Nacht, wenn niedrige Tarife gelten, verschlüsselte Token T gesammelt und erst am Tage bei hohen Tarifen verwendet werden.

Ein Abschluss des Gesprächs CALL wird durch eine vom Endgerät A ausgehende Nachricht RELEASE angezeigt. Als Folge stellt der Gatekeeper CC_{GK} die Zusendung verschlüsselter Token T an den Endpunkt A ein und beendet die optional gestartete Vergebührung des Gesprächs CALL. Mithin erhält auch das Edgedevice PER_{A} keine weiteren verschlüsselten Token T, so dass die Reservierung im Kommunikationsnetz nach kurzer Zeit verfällt. Der Resource Controller RC kann dann die freigegebenen Ressourcen wieder vergeben.

Durch Signalisierung wird der Abschluss der Gesprächs CALL auch dem Call Controller CC_{SIP} des Endpunktes B mitgeteilt. Dieser stellt ebenfalls das Versenden verschlüsselter Token T_{B} ein. Mithin verfallen auch alle vom Endpunkt B für das Gespräch CALL vorgenommenen Reservierungen im Kommunikationsnetz. Somit wird das Gespräch CALL konsistent ausgelöst.

Die Verschlüsselung und Entschlüsselung der Token T erfolgt beispielsweise entsprechend einem oder einer Kombination der im ITU-Standard H.235v2, "Security and Encryption for H-Series (H.323 and other H.245-based) Multimedia Terminals", 2000, Annex D-F, beschriebenen dezentralen Mechanismen zur Sicherung von (z.B. gemäß dem ITU-Standard H.225.0 ausgebildeten) Informationsübermittlungen:
- Authentifikation & Integrität mit symmetrischen Geheimnissen gemäß H.235, Annex D: Es wird vom Sender mit Hilfe eines Geheimnisses eine als kryptographischer Hashwert ausgebildete Signatur über die gesamte (Signalisierungs-) Nachricht gebildet und bei Übermittlung an die Nachricht angehängt. Vom Empfänger wird der Hashwert mit Hilfe des gleichen Geheimnisses dekodiert. Der Sender ist dann sicher identifiziert, wenn der Hashwert nach Dekodierung zur Nachricht passt. Die Geheimnisse sind als Passwörter ausgebildet und in einem zentralen Server hinterlegt. Sie werden in Sender und Empfänger out-of-band administriert.
- Authentifikation & Integrität mit asymmetrischen Geheimnissen gemäß H.235, Annex E: Es wird vom Sender eine kryptographische, digitale Signatur über die gesamte (Signalisierungs-) Nachricht gebildet. Weiterhin kommen Zertifikate zum Einsatz, die in-band übermittelt oder out-of-band administriert werden. Die privaten Schlüssel werden in den Endgeräten manuell administriert. Signieren ist zur Zeit noch eine zeitaufwendige Rechenoperation, die wegen der Echtzeitanforderungen nicht zur Anwendung bei jeder Informationsübermittlung geeignet ist. Diese Randbedingung dürfte jedoch mit fortschreitender Steigerung der Leistung von Rechnersystemen zunehmend in den Hintergrund treten.
- Authentifikation & Integrität der Signalisierung mit hybriden Geheimnissen gemäß H.235, Annex F: Es wird eine Kombination der beiden obigen Methoden realisiert, wobei zusätzlich ein sog. Session-Key mittels des Diffie-Hellman Verfahrens ausgetauscht wird. Dabei wird die erste Nachricht in jeder Richtung digital signiert, alle sonstigen Nachrichten werden symmetrisch integritätsgeschützt. Weiterhin kommen Zertifikate zum Einsatz, die in-band übermittelt oder out-of-band administriert werden.
- Vertraulichkeit der Mediendaten mit symmetrischen Geheimnissen gemäß H.235, Annex D nach dem Voice Encryption Profile (VEP): Dabei wird ein separater, gemeinsamer Schlüssel zum Verschlüsseln der Mediendaten mittels authentifiziertem Diffie-Hellman Verfahren zwischen den Endgeräten ausgehandelt.

Besonders schöne Vorteile ergeben sich, wenn die erfindungsgemäßen Verfahrensschritte mit Hilfe von bereits bestehenden, in diesem Ausführungsbeispiel entsprechend der H.323 Standard Familie bzw. dem RSVP Protokoll ausgebildeten Nachrichten ausgeführt werden, z.B. indem erfindungsrelevante Informationen in bereits vorhandene, ggf. spezielle Nachrichtenfelder eingefügt werden, die in den einschlägigen Standards z.B. als freie Felder ohne Funktionsangabe (optionale Parameter) vorgesehen sind.

Beispielsweise fügt das Endgerät das verschlüsselte Token T in eine ansonsten unveränderte RSVP Reservierungsnachricht RQ_{RSVP} an die Resource Control Ebene RCL ein. Dafür kommt z.B. das NULL Objekt von RSVP in Frage. Der IETF-Standard RFC2205 beschreibt dieses Element wie folgt: "A NULL object has a Class-Num of zero, and its C-Type is ignored. Its length must be at least 4, but can be any multiple of 4. A NULL object may appear anywhere in a sequence of objects, and its contents will be ignored by the receiver."

Alternativ wird das verschlüsselte Token T beispielsweise in das Feld INTEGRITY der standardisierten RSVP Nachrichten eingefügt. Dieses Feld trägt gemäß dem IETF-Standard RFC2205 folgende Information: "Carries cryptographic data to authenticate the originating node and to verify the contents of this RSVP message." Der Hinweis "originating node" (= Nutzerendgerät, Endpunkt) gibt hierbei keinen Hinweis, dass das verschlüsselte Token T von der Call Control Ebene CCL bereitgestellt wird. Vielmehr ist hier an eine abgestimmte Verschlüsselung zwischen dem für sich autonomen Endgerät A, B und der Resource Control Ebene RCL gedacht.

Selbstverständlich sind auch separate Nachrichten zur Übermittlung der erfindungsrelevanten Informationen möglich. Als weitere Alternative können die beiden Geheimnisse K_{A}, K_{B} auch manuell konfiguriert werden. Hierdurch entfällt der Einsatz eines aufwändigen Diffie-Hellman Verfahrens DH bei der Registrierung der Endgeräte A, B auf Kosten einer reduzierten Flexibilität der Anordnung, was in einem entsprechend starr konfigurierten Kommunikationsnetz durchaus sinnvoll und erwünscht sein kann. Eine entsprechende Ausgestaltung des Verfahrens ist in Figur 3 dargestellt. Hierbei sind die Geheimnisse K_{A}, K_{B} in den Endgeräten A, B und der zentralen Instanz C manuell vorkonfiguriert. Die Signalisierung bzgl. Registrierung und Call Setup wird gesichert durch die Geheimnisse K_{A}, K_{B} übermittelt.

Abschließend sei betont, dass die Beschreibung der für die Erfindung relevanten Komponenten des Kommunikationsnetzes grundsätzlich nicht einschränkend zu verstehen ist. Für einen einschlägigen Fachmann ist insbesondere offensichtlich, dass Begriffe wie 'Endpunkt', 'Call Control Ebene' oder 'Resource Control Ebene' funktional und nicht physikalisch zu verstehen sind. Somit können beispielsweise die Endpunkte A, B auch teilweise oder vollständig in Software und/oder über mehrere physikalische Einrichtungen verteilt realisiert werden.

## Patentansprüche

1. Verfahren zur Übermittlung von Informationen mit einer verifizierten QoS in einem Kommunikationsnetz, das eine Call Control Ebene (CCL), eine Resource Control Ebene (RCL) und zumindest einen der Informationsübermittlung zugeordneten Endpunkt (A) umfasst,
mit folgenden Schritten:
- für die Informationsübermittlung wird eine QoS Anforderung (RQ) ermittelt und in der Call Control Ebene (CCL) verifiziert,
- unter Berücksichtigung der in der Call Control Ebene (CCL) verifizierten QoS Anforderung (RQ) wird zumindest ein verschlüsseltes Token (T) gebildet und an den Endpunkt (A) übermittelt,
- von dem Endpunkt (A) wird die verifizierte QoS Anforderung (RQ) und das verschlüsselte Token (T) an die Resource Control Ebene (RCL) übermittelt,
- in der Resource Control Ebene (RCL) wird das verschlüsselte Token (T) entschlüsselt und die QoS Anforderung (RQ) mit Hilfe des entschlüsselten Tokens (T) verifiziert,
- das Kommunikationsnetz wird unter Berücksichtigung der derart verifizierten QoS Anforderung (RQ) so konfiguriert, dass die Informationen mit der verifizierten QoS übermittelt werden.

2. Verfahren nach Anspruch 1,
bei dem von der Call Control Ebene (CCL) wiederholt, insbesondere regelmäßig im Abstand von Sekunden wiederholt, ein Token (T) an den Endpunkt (A) übermittelt und von dort an die Resource Control Ebene (RCL) weitergeleitet wird.

3. Verfahren nach einem der Ansprüche 1 oder 2,
bei dem in das verschlüsselte Token (T) eine in ihrem Wert variable Information, insbesondere eine Zufallszahl und/oder ein Zeitstempel, eingearbeitet ist.

4. Verfahren nach einem der Ansprüche 1 bis 3,
bei dem das verschlüsselte Token (T) zwischen dem Endpunkt (A) und der Call Control Ebene (CCL) und/oder zwischen dem Endpunkt (A) und der Resource Control Ebene (RCL) in vorhandenen Signalisierungsnachrichten (RQ_{H.225.0}, CF_{H.225.0}, RQ_{RSVP}), insbesondere Keep-Alive Nachrichten und Nachrichten zur Auffrischung der QoS Anforderung (RQ), übermittelt wird.

5. Verfahren nach einem der vorstehenden Ansprüche,
bei dem von der Call Control Ebene (CCL) bei erfolgreicher Verifikation der QoS Anforderung (RQ) ein Accounting für die Informationsübermittlung gestartet wird.

6. Verfahren nach Anspruch 5,
bei dem von der Call Control Ebene (CCL) nach Abschluss der Informationsübermittlung das Accounting und die Übermittlung von verschlüsselten Token (T) an den Endpunkt (A) beendet wird.

7. Verfahren nach einem der vorstehenden Ansprüche,
bei dem die Verschlüsselung und Entschlüsselung mit Hilfe eines symmetischen Geheimnisses (K), insbesondere eines symmetrischen Schlüssels, bewirkt wird.

8. Computerprogrammprodukt (P) umfassend Softwarecodeabschnitte, mit denen ein Verfahren nach einem der vorstehenden Verfahrens-Ansprüche durch einen Prozessor ausgeführt wird.

9. Endpunkt (A), umfassend Mittel zur Durchführung eines Verfahrens nach einem der vorstehenden Verfahrens-Ansprüche.

10. Anordnung zur Durchführung eines Verfahrens nach einem der vorstehenden Verfahrens-Ansprüche.
